Europäisches Patentamt

European Patent Office

Office européen des brevets

(19)

(11) Publication number: **0 480 027 A1**

## EUROPEAN PATENT APPLICATION
## published in accordance with Art. 158(3) EPC

(12)

(21) Application number: 90900417.8

(22) Date of filing: **30.06.89**

(86) International application number:
**PCT/SU89/00185**

(87) International publication number:
**WO 91/00495 (10.01.91 91/02)**

(51) Int. Cl.⁵: **G01B 11/06**

(43) Date of publication of application:
**15.04.92 Bulletin 92/16**

(84) Designated Contracting States:
**AT DE FR GB NL**

(71) Applicant: **NAUCHNO-PROIZVODSTVENNY KOOPERATIV "FOKON"**
**Sablinskya ul.,14**
**Leningrad, 197101(SU)**

(72) Inventor: **KHOPOV, Vladimir Viktorovich**

**pr. Kultury, 11-1-253**
**Leningrad, 195274(SU)**
Inventor: **VASILIEV, Vladimir Nikolaevich**
**Zagorodny pr., 31-12-30**
**Leningrad, 191130(SU)**

(74) Representative: **Crawford, Andrew Birkby**
**A.A. THORNTON & CO. Northumberland**
**House 303-306 High Holborn**
**London WC2A 1AY(GB)**

(54) **METHOD AND DEVICE FOR DETERMINING THE THICKNESS OF A GLASS TUBE.**

(57) A device for determining the thickness of a glass tube provides for projecting two parallel light beams onto the wall of the tube (18) to be inspected at an angle to the normal drawn from the source of the light to the axis of the tube (18), interferometrical comparison of said light beams reflected by the walls of the tube (18), changing the optical path of one of the light beams and measuring said change of the optical path from the initial value and up to the moment of obtaining the interference picture of the maximum contrast. The distance between the optical axes of the light beams and the difference between their optical paths are changed according to the following formula (I): $\Delta D = (Kt + C) Sin^2\alpha/2(n^2-Sin^2\alpha)$, $\Delta L = Kt + C$, where $\Delta D$ represents the distance between the optical axes of the light beams; $\Delta L$ represents the difference between their optical paths, in m; K represents the velocity, c; n represents refractive index of the wall of the tube; $\alpha$ represents the angle between the normal to the axis of the tube and the optical axes of the light beams, rad; C represents a constant, determined by a condition: $\delta < \Delta Lmin < 2\sqrt{n^2-Sin^2\alpha}.dmin-\delta$, $\Delta Lmax > 2\sqrt{n^2-Sin^2\alpha}.dmax + \delta$, where: $\delta$ represents the length of the coherent radiation, m; $\Delta Lmin$, $\Delta Lmax$ represents minimum and maximum values of the difference between the optical paths. m; dmin, dmax represent minimum and maximum values of the thicknesses of the tube, m. The device for implementing the method comprises an illuminating system (1), a two-beam interferometer (2) with two reflectors (6) and (11), one (6) of which is located on a modulator (8), and an axle for receiving the tube. The optical axis of the illuminating system (1) is oriented at a angle $\theta$ to the normal to the face (17) of a cube (5), whereas the axle (13) lies in a plane oriented symmetrically to the beam plane of incidence of the system (1) in relation to the light dividing edge (12), whereas the normal drawn to the axle (13) in the plane of its location is oriented at an angle $\alpha$, the angles $\theta$ ad $\alpha$ being interrelated according to formula (II): $tg \theta = Sin^2\alpha/2(n^2-Sin^2\alpha)$ where n represents refractive index of the wall of the tube.

FIG.1

Technical Field

The present invention relates to measurement technology and may be used to determine the thickness of a glass tube wall by an interferometric methol. The invention may preferably be used to monitor the thickness of a glass tube during its manufacturing process.

Background Art

One of the substantial difficulties which arise in monitoring the thickness of the wall of a glass tube when the latter is manufactured , is the wobbling of the axis of the tube about its fastening points, due to a number of causes such as high temperatures at which the manufacturing process is conducted, an uncontrollable displacement of the tube affecting, as a rule, the interferometric readings of the wall thickness.

Known in the art is a method for determining the wall thickness of a glass tube residing in splitting the radiation of a coherent light source into two beams, directing one light beam to the wall of the tube to be checked so that the optical axis of said beam is located in a plane passing through the axis of the tube to be checked, using the other light beam as a reference beam in recording the hologram of one surface of the tube wall, and determining in the hologram plane, that is in the interference field of the reference and object beams, the points with maximum contrast of interference bands. The difference in optical paths of the light beams at these points is zero. Therefore, the position of said surface of the glass tube wall, with respect to which the hologram is recorded, is defined from the value of the optical path of the reference beam which is known (N.Abramson, "The Making and Evaluation of Holograms", 1981, Academic Press (London), pp. 315-319). In order to determine the tube wall thickness, the position of the other surface of the tube wall is measured in a similar manner, and the difference in position of the inside and outside surfaces is calculated.

Also known is an apparatus for determining the thickness of a glass tube wall, based on a holographic interferometer and containing a source of coherent radiation - a laser, an interferometer including amplitude beam splitter - a mirror, a second mirror adapted for forming a reference beam, an axis for mounting the glass tube to be measured, a photodetector represented by a hologram and located in the interference field of the reference and object beams (N.Abramson, "The Making and Evaluation of Holograms", 1981, Academic Press (London), pp.315-319).

The hologram is registered only on those photoplate areas where the optical path difference of interfering beams is less than the coherent wave length of the laser. The photoplate areas with maximum contrast of interference bands as well as the parts of the object surface corresponding to these areas can be determined if one examines the object image reconstructed by the reference beam illuminating the hologram. As the reference beam geometry is known, the object surface position is determined by the condition of optical path equality of the beams on the distance up to the photoplate areas with maximum contrast of interference pattern.

In this design, as mentioned above, the wall thickness of a glass tube is determined by calculation of the difference between positions of outside and inside surfaces of the tube wall measured at different moments. But when the tube axis has a shift relative to its fastening points, especially when this shift is in the direction of the beam, which shift of the glass tube may be formed during its manufacture, an incontrollable change of position of the tube wall is possible which brings an error into the measurement of position of one surface of the tube wall relative to its other surface and, accordingly, into the wall thickness determined.

Moreover, when a hologram registers the result of interference of the reference beam and of the beam reflected by the object, it does not allow to use this design in real time scale and therefore, such a method requires for its realization a considerable amount of time.

Known in the art is a method of determining the wall thickness of a glass tube, comprising the steps of splitting the coherent source radiation into two beams, directing one beam onto the wall of the tube to be checked, so that the optical axis of said beam lies in a plane containing the tested tube axis, thus forming an object beam, directing a second beam onto a reference mirror to form a reference beam, aligning and comparing interferometrically the beams reflected from one surface of the tube and from the reference mirror, varying the reference beam optical path, and measuring the optical path variation of the reference beam from its initial value up to the moment when in the interference pattern a maximum contrast appears, which permits to determine the desired parameter, which in this measurement, is the position of one surface of the glass tube wall relative to said initial value (US, A, 4647205). In order to determine the thickness of a glass tube wall, the position of the second surface of the tube wall is measured in a similar way and, relative to the same initial value, the difference between the measured positions of outside and inside surfaces is calculated.

Also known is an apparatus for determining the wall thickness of a glass tube, which comprises, arranged in series, a system of illumination consisting of a coherent radiation source - a laser and a lens, a Michelson interferometer including a beam-splitting cube, a reflector arranged on an optical path modulator perpendicular to and symmetric about a normal falling to the center of the beam-splitting cube surface facing said reflector (US, A, 4647205). The reflector is a mirror, and the optical path modulator is mounted so that it can move along said normal, and is provided with a system measuring its displacement. The apparatus also contains an axis serving to mount the tube thereon and placed after the interferometer exit window, a photodetector, a unit determining the contrast between interference bands and having its input connected to the photodetector output, a unit registering position of the optical path modulator and connected to the system measuring the modulator displacement and to the output of the unit determining the contrast between unterference bands.

The optical path modulator is a membrane having an electromagnetic motor in the form of a coil connected to a saw-tooth current source. The reflector mirror is fixed on the membrane. The system measuring the modulator displacements includes a unit which measures its initial position and relative displacement and contains a meter for the saw-tooth current supplied to the membrane and a calibration chart associating the current supplied to the membrane with the reflector position. The initial modulator position is the position of membrane with mirror at zero current.

Unlike the previous design, the method of US, A, 4647205 is realizable on a real time scale, and the time needed for its realization is for that reason considerably reduced. But, as in the previous design, the thickness of a glass tube wall is here determined by calculation of difference between the positions, measured at different moments, of the tube wall outside and inside surfaces relative to one and the same initial value, and this technique, if the tube has an incontrollable shift, especially in the direction of the probing beam, brings an error into the measurement of position of one surface of the tube wall relative to its other surface and, accordingly, into the wall thickness determination.

When the tube axis has a shift perpendicular to the probing beam and to the axis on which the tube is mounted, or when the tube axis has a change in its angular orientation relative to said beam, the interfering beams will come to photodetector input aperture with an angle between them, resulting in a considerable growth of frequency of the interference bands, which generates a need for reducing the photodetector aperture diaphragm and, finally, for increasing the measurement time, because the signal-to-noise ratio decreases and, in order to preserve the precision of measurement, one is forced to reduce the rate of taking the readings or, in other words, to accumulate the readings.

Furthermore, the fact that the unit adapted for measuring the initial position of the optical path modulator and its relative displacement uses a calibration chart associating the current supplied to the membrane with the reflector position obliges to recalibrate the system rather frequently because the optical path modulator parameters may have a drift due, for example, to ambiant temperature variations or to ageing of the membrane.

Disclosure of the Invention

The principal object of the present invention is to provide a method of determining the thickness of a glass tube wall, in which the beams obtained after splitting the ray emitted by a coherent light source would be directed so and the distance between optical axes of these beams and their optical path difference would vary according to such relationships, and also to create an apparatus for determining the thickness of a glass tube wall, in which a second beam shaper would be made so and the illuminating system optical axis and the axis for mounting of the glass tube would be oriented relative to each other in space so as to provide measurement of the difference between the positions of the glass tube inside and outside surfaces, thus determining the thickness of the glass tube wall of a single measurement, and thereby eliminating the influence of an uncontrollable displacement of the glass tube axis during its manufacture, on the results of measurement of its wall thickness without extending the measurement time.

With this principal object in view, there is provided a method of determining the thickness of a glass tube wall, comprising the steps of splitting the ray emitted by a coherent light source into two beams, directing one beam onto the wall of the tube to be measured, so that the optical axis of this beam is in a plane containing the axis of the tube to be checked, aligning and comparing interferometrically the beam reflected from the tube wall with the second beam, varying the beam optical path, and measuring said variation of the optical path from its initial value up to the moment of maximum contrast in the interference pattern, by which contrast the necessary parameter is evaluated, in which method, according to the

4

invention, the first beam directed onto the glass tube wall is oriented at an angle to a normal dropped from the illumination side onto the axis of said tube, the second beam is directed onto the glass tube wall so that the second beam optical axis is located in said plane containing the first beam optical axis, is oriented parallel to the latter and does not meet the normal falling in the plane containing both optical axes of said beams from the side of illumination into the point where the first beam optical axis meets the tube wall surface nearest to the source, the distance between optical axes of the first and the second beams as well as their optical path difference being varied according to the following relations:

$$\Delta D = (Kt + C) \frac{\sin 2\alpha}{2(n^2 - \sin^2\alpha)}$$

$$\Delta L = Kt + C$$

where:

$\Delta D$, distance between the optical axes of the first and the second beams, m;

$\Delta L$, optical path difference of the first and the second beams, m;

K, rate of variation of the optical path difference of said beams, m/s;

t, time, s;

n, refractive index of the glass tube wall;

$\alpha$, angle between the normal to the tube axis and the optical axes of the first and the second beams, rad;

C, constant, m, defined by the following condition:

$$\delta < \Delta L_{min} < 2\sqrt{n^2 - \sin^2\alpha} \cdot d_{min} - \delta$$
$$\Delta L_{max} > 2\sqrt{n^2 - \sin^2\alpha} \cdot d_{max} + \delta ,$$

where:

$\delta$ is the coherent wave length, m:

$\Delta L_{min}, \Delta L_{max}$, minimum and maximum values of optical path difference between the first and the second beams, m;

$d_{min}, d_{max}$, minimum and maximum values of thickness of the glass tube wall, m.

With this principal object in view, there is also provided an apparatus for determining the thickness of a glass tube wall comprising, positioned in series, an illumination system including a coherent light source and a lens, a double-beam interferometer including a beam-splitting cube, a reflector arranged perpendicular to and symmetric about a normal falling onto a center of a beam-splitting cube surface facing said reflector which is set on an optical path modulator mounted for movement along said normal and fitted with a system measuring the displacement of the optical path modulator with a unit measuring its initial position, an axis on which the glass tube is mounted and which is located after the interferometer exit window in the direction of the beam, a photodetector placed before said axis for the tube on the reverse path of the beam, a unit adapted for evaluating contrast of interference bands and having its input connected to photodetector output, a unit adapted for registering the optical path modulator position and connected to the system measuring the optical path modulator displacement and to the output of the unit evaluating contrast of the interference bands, in which apparatus, according to the invention, the interferometer has a second reflector symmetric to the first reflector about the light-splitting face of the beam-splitting cube, the optical axis of the illumination system makes an angle $\theta$ with a normal dropped onto the beam-splitting cube face turned towards the illumination system, and the axis on which the tube is mounted lies in a plane symmetric to the plane of incidence of the ray emitted by the illumination system on said face of the beam-splitting cube, the symmetry plane being the light-splitting face of the cube, whereas the normal falling onto the axis for the tube in a plane passing through said axis makes an angle $\alpha$ with the beam direction, the angle $\theta$ and $\alpha$ being related between them by the equation:

$$\tan\theta = \frac{\sin 2\alpha}{2(n^2 - \sin^2\alpha)} ,$$

where n is the refractive index of the glass tube wall.

The fact that both light beams are directed onto the glass tube wall provides alignment and interferometric comparison of beams reflected at the same time from the glass tube wall outside and inside surfaces, and the measured optical path variation of one of the beams from its initial value up to the moment of maximum contrast in the interference pattern corresponds to the difference of positions of said surfaces of the tube wall, that is to its thickness. So the thickness of a glass tube wall is determined in one measurement, thus eliminating the influence on the measurement results of an uncontrollable shift of the tube axis (especially in the direction of the probing beam).

When the probing light beams fall on a glass tube wall at an angle to a normal dropped from the side of the illumination system on the axis on which the tube is mounted, parasitic glares from the tube wall which is backward relative to the beam direction are eliminated, said angle depending on aperture diaphragm of the photodetector registering the beams compared and being chosen on the condition that the beams reflected from the backward (relative to the beam direction) tube wall are directed outside of the photodetector aperture diaphragm.

If the optical path difference of the first and the second beams falling on the tube wall and the distance between their optical axes are simultaneously varied according to the following relations:

$$\Delta L = Kt + C \quad (1); \qquad \Delta D = (Kt + C) \frac{\sin 2\alpha}{2(n^2 - \sin^2 \alpha)} \quad (2)$$

where

$\Delta D$     is the distance between the optical axes of the first and the second beams, m;
$\Delta L$,     the optical path difference of the first and the second beams, m;
$t$,     the time, s;
$K$,     the rate of variation of the optical path difference of said beams, m/s;
$C$,     the constant, m, defined from the following condition;

$$\delta < \Delta L_{min} < 2 \sqrt{n^2 - \sin^2} \cdot d_{min} - \delta \quad (3)$$

$$\Delta L_{max} > 2 \sqrt{n^2 - \sin^2} \cdot d_{max} + \delta, \quad (4)$$

where

$\delta$     is the coherent wave length, m;
$\Delta L_{min}, \Delta L_{max}$     are the minimum and maximum values of the optical path difference of said beams, m;
$d_{min}, d_{max}$,     the minimum and maximum values of the wall thickness of the glass tube to be checked, m,

then at the moment when the optical axis of the first beam reflected from the outside surface of the tube wall and the optical axis of the second beam reflected from the inside surface of the tube wall will coincide, the optical path difference of said reflected beams will equal zero, and the photodetector will present an interference pattern with maximum contrast. The correctness of this statement may be demonstrated by substitution, in the left part of the relation (1) of an expression for the optical path difference of light beams reflected from the two plane-parallel surfaces of a plate (if the size of a particular area on the tube surface is smaller than the tube radius, this area being considered plane):

$$\Delta L = 2d \cdot \sqrt{n^2 - \sin^2 \alpha}, \quad (5)$$

and after that, a manipulation with the relation (2) yields:

$$\Delta D = \frac{d \cdot \sin 2\alpha}{\sqrt{n^2 - \sin^2 \alpha}}, \quad (6)$$

expression identical to that which determines the distance between the beams reflected from the surfaces of a plane-parallel plate. The coincidence of optical axes of the reflected beans, compared interferometrically, at the moment of maximum contrast in the interference pattern provides a possibility to register the interferometric pattern over a wide range of the tube thicknesses measured without a necessity to reduce the input aperture of the photodetector which registers this interferometric pattern and, accordingly, without increase in the measurement time.

Owing to the fact that the interferometrically compared beams fall onto the wall of the tube to be checked parallel to each other, in case the tube axis has a shift perpendicular to the probing beam direction and to the axis on which the tube is mounted, or in case of a variation in the angular orientation of the tube axis relative to said beam, the reflected beams attaining the photodetector aperture diaphragm remain essentially parallel and, accordingly, the frequency of interference bands will not increase and there will be no necessity to extend the measurement time.

The second reflector arranged symmetric about the light-splitting face to the first reflector and provided in the apparatus for determining the thickness of a glass tube wall, permits the second beam to be directed parallel to the first beam onto the wall of the glass tube.

Said orientation of the axis on which the tube is mounted permits the probing light beams to be directed onto the glass tube wall at an angle to a normal dropped on the side, facing the interferometer, of the axis on which the tube is mounted, and, together with said orientation of the illumination system optical axis, provides a coincidence of optical axes of the interferometrically compared beams at the moment of maximum contrast in the interference pattern.

It is advisable that the first and the second reflectors be made as triple prisms, that the illumination system optical axis have a shift relative to the vertex of the triple prism of the first reflector, and that the unit measuring the initial position of the optical path modulator consist of a reference plane-parallel plate placed on the beam path after the illumination system outside its optical axis, so that a normal dropped on said reference plate would lie in the plane of incidence of the ray emitted by the illumination system onto the beam-splitting cube side facing the illumination system, and would be oriented at an angle $\beta$ to the beam passing through said plate, of a photodetector positioned in front of said plate on the reverse path of the beam, and of a unit determining the contrast in the interference pattern and having its input connected to the photodetector output, whereas the angles $\theta$ and $\beta$ must be related by the following equation:

$$tan\theta \equiv \frac{\sin 2\beta}{2(n_1^2 - \sin^2\beta)} \quad ,$$

where $n_1$ is the refractive index of the reference plate.

When a reference plane-parallel plate used for the measurement of the optical path modulator initial position is clamped in position relative to the apparatus base, no calibration is needed for the apparatus, and eventual variations of parameters of the optical path modulator due, for example, to ambient temperature drift or to ageing of the optical path modulator membrane, exert no influence on said measurement of the modulator initial position. Said inter-dependency between orientation of the reference plane-parallel plate and orientation of the illumination system optical axis provides coincidence of the optical axes of beams reflected from said plane-parallel plate when their optical path difference is equal to zero. As a result, the photodetector of the unit measuring the initial position of the optical path modulator exhibits an interference pattern with maximum contrast. The position of the optical path modulator, corresponding to such a position of the reflectors which act as shapers of the beams exploring the glass tube and the reference plane-parallel plate, at which position the photodetector of the unit measuring the initial position of the modulator exhibits an interference pattern with maximum contrast, is exactly the initial position of the modulator. The thickness of the reference plane-parallel plate is equal to the average value of the allowable range of wall thicknesses of the tube to be checked, this range being known beforehand. The reflectors made in the form of triple prisms and the shift of the illumination system optical axis in the plane of its location relative to the vertex of the triple prism of the first reflector, provide a possibility to displace the reference plate relative to the illumination system optical axis, thus eliminating parasitic glares arising due to reflection of light from the sides of said plate and also, reducing light losses. It is also advisable that the photodetector positioned before the axis for the tube be made as a line of photodetectors with distances between their centers equal to the aperture of the illumination system. When the photodetector registering the beams reflected from the wall surfaces of the glass tube has the form of a line of photodetectors, it permits to extend the range of possible shifts of the tube axis in the direction perpendicular to the probing beam and to the axis on which the tube is mounted without increase of linear aperture of the output ray of the illumination system in said direction and, accordingly, without increase of measurement time due to diminished exposure of the photodetector. The fact that the distances between centers of photodetectors constituting said line are equal to output aperture of the illumination system excludes the disappearance of the signal in case the tube axis has a shift perpendicular to the path of the probing beam and to the axis on which the tube is mounted.

It is advisable that the apparatus comprise a plane-parallel plate positioned between the interferometer exit window, so that a half of its exit pupil is overlapped, and the axis for the tube, with the interferometer exit pupil boundary being the plane containing the axis for the tube and the normal to said plate in this plane being oriented parallel to the beam path.

The presence of a plane-parallel plate positioned as described above allows to probe the glass tube with the two parallel beams misaligned inside its section, thus providing also an extended range of displacement of the tube axis in the direction perpendicular to the probing beam path and to the xis on which the tube is mounted. The angles of positioning of the plate and its thickness are selected by the known methods on the condition that, with prescribed size of the photodetector aperture diaphragm or with prescribed length of the photodetector line, the photodetector gets the specks of light from only one probing beam.

The above-described advantages and features of the present inventions will be better understood from the following preferred embodiment of the invention, taken in conjunction with the accompanying drawings.

Brief Description of the Drawings

FIG.1 is an optical diagram of an apparatus in accordance with the present invention;
FIG.2 is an optical diagram of the apparatus shown in FIG.1 with a unit measuring the initial position of the modulator and with a plane-parallel plate;
FIG.3 is an optical diagram of the apparatus shown in FIG.2, axonometric projection; and
FIG.4 is a diagram representing the paths of the beams probing the tube.

Since the proposed method is realized in the operation of the apparatus, the method of the invention is described together with the description of operation of the apparatus.

Best Mode for Carrying out the Invention

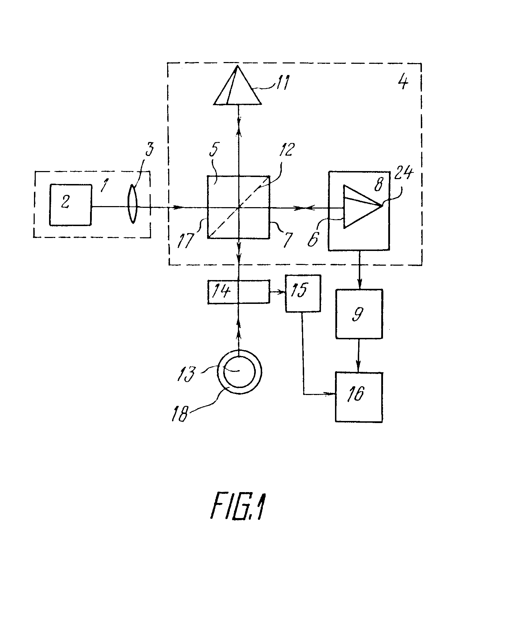

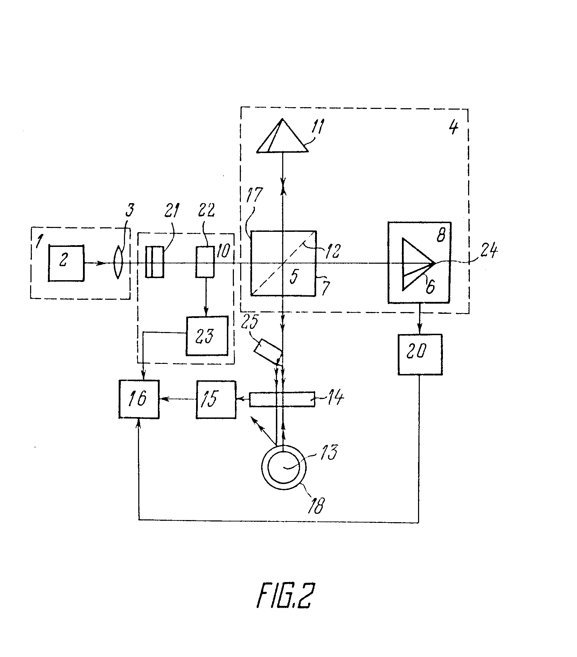

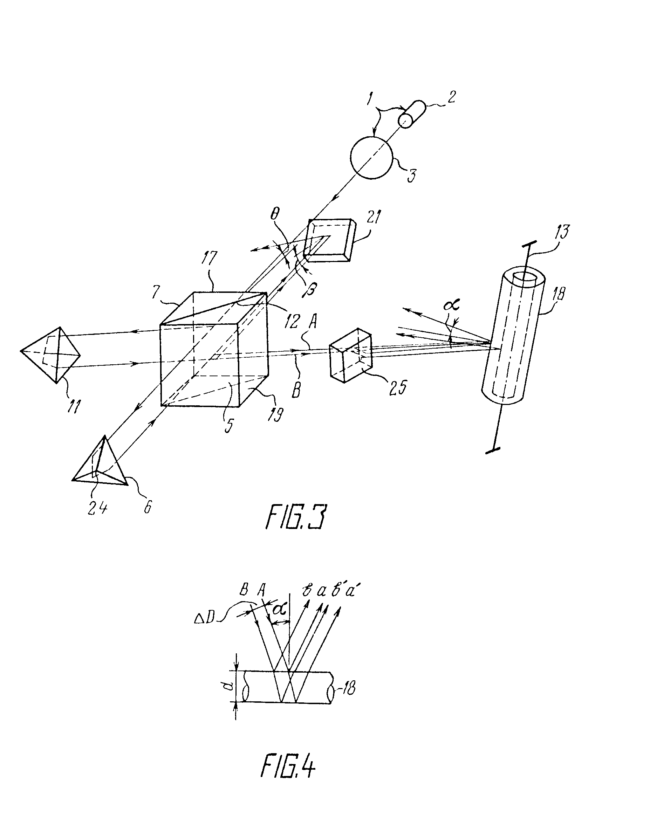

The apparatus for determining the thickness of a glass tube wall comprises, positioned in series, an illumination system 1 (FIG.1) consisting of a coherent light source 2, a semiconductor laser for example, and of a lens 3, a double-beam interferometer 4 realizing, for example, a Michelson configuration and including a beam-splitting cube 5, a first reflector 6 mounted perpendicular to and symmetric about a normal falling into the center of a side 7 of the beam-splitting cube 5, facing the reflector 6, the reflector 6 being located on an optical path modulator 8 mounted for movement along said normal fitted with a system 9 adapted for measuring its displacement and containing a unit 10 (FIG.2) adapted for measuring the initial position of the modulator 8, and also including a second reflector 11 arranged symmetric to the first reflector 6 about a light-splitting face 12 of the beam-splitting cube 5. Besides, the apparatus comprises an axis 13 (FIG.3) serving as support for the glass tube and located after an exit window (not shown) of the interferometer 4 (FIG.1), a photodetector 14 positioned in front of said axis 13 for the tube on the reverse path of the beam, a unit 15 adapted for determining the contrast of interference bands and having its input connected to the output of the photodetector 14, a unit 16 registering the position of the optical path modulator 8 and connected to the system 9 measuring the displacements of the modulator 8 and to the output of the unit 15 determining the contrast of interference bands.

In a general case axis of the illumination system 1 (FIG.3) makes an angle $\theta$ with the normal dropped on the side 17 of the beam-splitting cube 5, facing the illumination system 1. The axis 13 for the tube lies in a plane symmetric about a plane of incidence of the ray emitted by the illumination system 1 onto said side 17 of the beam-splitting cube 5 with respect to the light-splitting face 12 thereof whereas the normal dropped upon the axis 13 for the tube in a plane containing said axis 13 is oriented at an angle $\alpha$ with the beam direction. The angles $\theta$ and $\alpha$ are related between them by the following expression:

$$\tan \theta = \frac{\sin 2\alpha}{2(n^2 - \sin^2\alpha)} \quad ,$$

where n is the refractive index of the test tube wall.

The angles $\theta$ and $\alpha$ are measured from the normals towards the beam direction, respectively, in opposite directions, if the observer looks along the beam path.

The angle $\alpha$ depends on the size of aperture diaphragm of the photodetector 14 (FIG.1) and is selected on the condition that the beams reflected from the backward (if one looks in the beam direction) wall of the glass tube 18 are directed outside the aperture diaphragm of the photodetector 14. The orientation of the plane of incidence of the ray emitted by the illumination system 1 is chosen in an arbitrary manner, so as to obtain a better design. In a particular embodiment of the apparatus for determining the wall thickness of a glass tube 18, shown in FIG.3, the optical axis of the illumination system 1 lies in a plane containing the normal falling on the side 17 of the beam-splitting cube 5 and perpendicular to the base 19 of the cube 5. The axis 13 for the tube lies in a plane cutting the beam path and disposed perpendicular to the base 19 of the beam-splitting cube 5. The optical path modulator 8, as in the design disclosed in US, A, 4647205, comprises a membrane (not shown) fitted with an electromagnetic drive (not shown) in the form of a coil connected to a saw-tooth current source (not shown). The first reflector 6 is fixed on said membrane of the optical path modulator 8. The range of displacements of the optical path modulator 8 is chosen on the condition of accord between its positions and the range of possible positions of the outside and inside surfaces of the wall of a glass tube 18, that is the range of possible wall thicknesses of said tube 18. At the same time the modification of optical path by the modulator 8 may not be less than two coherent wave lengths of the radiation source. This condition arises from a requirement to analyse the contrast function of the bands, variable in this interval of optical path difference of interfering light beams. The measuring system 9 (FIG.1) adapted for measuring the displacements of the optical path modulator 8 comprises two units, namely a unit 10 measuring the initial position of the optical path modulator 8 (FIG.2) and unit 20 measuring its relative displacement. The unit 10 measuring the initial position of the optical path modulator 8 comprises a reference plane-parallel plate 21 having a prescribed thickness, a photodetector 22 positioned in front of said plate 21 on the beam reverse path, and a unit 23 determining the contrast of interference bands whose input is connected to the output of the photodetector 22. For the operation of said unit 10 measuring the initial position of the modulator 8, the first and the second reflectors 6 and 11, respectively, have the form of triple prisms, whereas the optical axis of the illumination system 1, in the plane where it lies, is offset relative to the vertex 24 of the triple prism of the first reflector 6 (FIG.3). In a general case, the reference plane-parallel plate 21 is located after the illumination system 1 on the beam path outside the optical axis of the, system 1. The normal dropped on said reference plate 21 lies in the plane of incidence of the ray emitted by the illumination system 1 and falling on the side 17 of the beam-splitting cube 5, facing said illumination system 1, and is oriented at an angle $\beta$ to the direction or the beam piercing the reference plate 21. The angles $\theta$ and $\beta$ are related between them by the following expression:

$$\tan \theta = \frac{\sin 2\beta}{2(n^2 - \sin^2\beta)}$$

where n is the refractive index of the reference plate 21. The angle $\beta$ is measured in the same way as the angle $\alpha$. In the apparatus shown in FIG.3 the reference plane-parallel plate 21 is oriented so that the normal dropped on said plate 21 lies in a plane passing through the optical axis of the illumination system 1 and perpendicular to the base 19 of the cube 5. The thickness of the reference plane-parallel plate 21 is equal to the mean value over the allowable range of wall thicknesses of the tube 18, which is known beforehand. Owing to the fact that for measuring the initial position of the modulator 8 this apparatus uses a reference plane-parallel plate 21 whose positions is rigidly clamped relative to the apparatus base, the apparatus needs no recalibration and measurement results are not influenced by eventual variations of parameters of the optical path modulator 8 due, for example, to ambient temperature variations or to ageing of the membrane (not shown) of the optical path modulator 8. The unit 20 (FIG.2) measuring the relative displacement of the optical path modulator 8 is built according to a known diagram and comprises a light-emitting diode (not shown) and a photodiode (not shown), constituting an optron couple and, two parallel plane rasters (not shown) mounted therebetween, one of the rasters is fixed on the optical path modulator 8. By their planes the rasters are parallel and by their lines, perpendicular to the direction of displacement of the optical path modulator 8.

There is also possible another embodiment of the unit 10 measuring the initial position of the optical path modulator 8 and of the unit 20 measuring its relative displacement, for example, according to US, A, 4647205, but then a frequent recalibration of the apparatus will be necessary. The reflectors 6 and 11 may be designed as mirrors. Then in spite of the fact that two parallel beams are directed to the wall of the tube 18 to be tested, it becomes impossible to position the reference plane-parallel plate 21 with an offset relative to the optical axis of the illumination system 1 and therewith, to eliminate parasitic glares due to reflection of light from the planes of said plate 21. Furthermore, with triple prisms used as reflectors 6 and 11 the apparatus becomes less disadjustable, its alignment is more easily realized, and the light losses diminish if compared with a similar apparatus using mirrors in the capacity of reflectors. The photodetector 14 registering the light beams reflected from the wall of the glass tube 18 is represented by a line of photodetectors with distances between their centers equal to the output aperture of the illumination system 1. The line of photodetectors 14 is oriented perpendicular to the axis 13 on which the test tube is mounted. Such a design of the photodetector 14 extends the range of possible displacements of the axis of the tube 18 in the direction perpendicular to the probing beam and to the axis 13 for the tube, without enlargement of linear aperture of the output ray emitted by the illumination system 1 and, consequently, without increase of the measurement time.

There is also possible another embodiment of the apparatus wherein the photodetector 14 is a single device. Mounted between the exit window (not shown) of the interferometer 4 and the axis 13 for the tube is a plane-parallel plate 25 covering a half of the exit pupil of said interferometer 4. In a general case a plane containing the axis 13 for the test tube is the boundary for the exit pupil of the interferometer 4, the projection of the normal falling on said plate 25 in said plane being oriented parallel to the beam path. In the apparatus shown in FIG.3 the boundary of the exit pupil of the interferometer 4 is perpendicular to the base 19 of the beam-splitting cube 5, whereas the normal to the surface of this plate 25 is parallel to the base 19 of the beam-splitting cube 5 and makes an angle with the beam path. Thanks to the presence of this plate 25 two beams probing the test tube 18 are formed, which are spaced over the tube section, thus extending the allowable range of displacement of the tube 18 in the direction perpendicular to the probing beam path and to the axis 13 for the tube. The angle at which the plate 25 is mounted and its thickness are selected by methods already known based on the condition that, when the size of aperture diaphragm of the photodetector 14 (FIG.2) or the length of the line 14 of photodetectors is predetermined, the photodetector 14 receives the light specks formed by only one probing beam.

Another possible embodiment is an apparatus without said plane- parallel plate 25. In addition, in a particular case, and namely, in case the plane of incidence of the beam is oriented according to FIG.3, a semi-transparent plate (not shown) may be placed between the reference plate 21 and the beam-splitting cube 5, whereas the normal to this plate must be oriented at an angle to the beam path and parallel to the base 19 of the beam-splitting cube 5. The angle of orientation of said plate is chosen on the same principle as the angle at which the plate 25 is positioned. This plate allows to deviate as much as 70% of light towards the surface of the tube 18 and, in this way, to form a third probing beam at the same angle with the normal dropped on the axis 13 for the test tube as the first two. The units 15 and 23 determining the contrast of interference bands, in a general case, may be assembled in accordance with a known configuration, for example, connected in series, a detector (not shown), a differentiator (not shown) and a level limiter (not shown) (J.Marchais, "L'amplificateur operationnel et ses applications", 1971, Masson et C.Editeurs (Paris)). In case the photodetector 14 is represented by a line of photodetectors, the detectors outputs, the number of which will be equal to the number of photodetectors, are connected to the inputs of an adder (not shown) whose output is connected to the differentiator. As to the differentiator output, it is connected to a pulse shaper (not shown). The unit 16 registering the position of the optical path modulator 8 also realizes a known configuration and comprises three triggers (not shown), two of them having setting inputs. The outputs of the triggers having setting are connected, via two-input coincidence elements & (not shown) to counters (not shown). The third trigger has its clock input connected to the output of one of the two triggers which have setting inputs.

The free inputs of coincidence elements of the unit 16 registering the position of the optical path modulator 8 are connected to the output of the unit 20 measuring the relative displacement of the optical path modulator 8. The reset inputs R of the first and the second trigger are connected, respectively, to the outputs of the units 15 and 23 determining contrast of interference bands, whereas the set inputs S of said triggers are connected, respectively, to the outputs of the units 23 and 15 determining contrast of interference bands.

The apparatus for determining the thickness of a glass tube wall operates as follows.

The illumination system 1 (FIG.1) emits a convergent light beam directed at an angle $\theta$ (FIG.5) to a normal dropped on the side 17 of the beam-spilitting) cube 5, facing the illumination system 1. The light-splitting face 12 of the beam-splitting cube 5 separates said beam into two beams. Owing to the fact that the first reflectors, 6 and 11 are positioned, respectively, perpendicular to and symmetric about the normals falling into the centers of the sides of the beam-splitting cube 5 which face said reflectors, and also symmetric to each other about the light-splitting face 12 of the beam-splitting cube 5, reflections from the reflectors 6 and 11 give birth to two light beams A and B parallel to each other and probing the wall of a test glass tube 18 (FIG.3) as well as the reference plane-parallel plate 2 at angles $\alpha$ and $\beta$, respectively, relative to normals dropped on the axis 13 supporting the test tube and an said plate 21. FIG.4 shows a diagram of beams probing the wall of the tube 18. The light specks a and $a^l$ of the first beam reflected from the outside and the inside surfaces of the wall of the glass tube 18, respectively, and the specks b and $b^l$ of the second beam reflected, respectively, from the outside and the inside wall surfaces of the glass tube 18, interfering two by two between them, create a complicated interference pattern. Owing to the fact that the beams A and B formed in this manner fall on the glass tube wall parallel to each other, in case of a shift of the tube axis in a direction perpendicular to that of the probing beam and to the axis 13 for mounting the tube, and also in case of variation of orientation angles of the tube axis relative to said beam, the reflected beams (specks a, $a^l$, b and $b^l$) falling on the aperture diaphragm of the photodetector 14 (FIG.2) remain substantially parallel and, for this reason, there will be no increase of interference bands frequency and no increase of measurement time in contrast to the design proposed in US, A, 4647205. Therewith, thanks to the fact that the beams which probe the tube 18 fall on the wall of said tube 18 (FIG.3) at an angle $\alpha$ to a normal dropped from illumination side in the plane containing the axis 13 for mounting the tube on said axis, and that the angle of incidence of the probing beams and the aperture diaphragm of the photodetector 14 (FIG.2) are selected on the condition that the light beams reflected from the backward (taking into account the beam direction) wall of the glass tube 18 are directed outside the aperture diaphragm of the photodetector 14, parasitic glares from the backward (viewed in the beam direction) wall of said tube 12 are eliminated. The distance between optical axes of the beams A and B and their optical path difference are varied simultaneously according to the following relations:

$$\Delta D = (Kt + C) \frac{\sin 2\alpha}{2(n^2 - \sin^2\alpha)} , \qquad \Delta L = Kt + C ,$$

where

$\Delta D$     is the distance between optical axes of the light beams A and B, m;

$\Delta L$     is the optical path difference between the beams A and B, m;

t     is the time, s;

K     is rate of variation of the optical path difference of the beams, m/s;

n     is the refractive index of the tube wall;

$\alpha$     is the angle between the optical axes of the beams A and B and the normal dropped from the illumination side 1 in the plane containing the axis 13 for the test tube on said axis, rad;

C     is the constant, m, determined by the following condition:

$$\delta < \Delta L_{min} < 2\sqrt{n^2 - \sin^2\alpha \cdot d_{min}} - \delta$$

$$\Delta L_{max} > 2\sqrt{n^2 - \sin^2\alpha \cdot d_{max}} + \delta ,$$

where

$\delta$     is the coherent wave length, m;

$\Delta L_{min}, \Delta L_{max},$     the minimum and maximum values of the optical path difference of the light beams A and B, m;

$d_{min}, d_{max},$     the minimum and maximum values of the wall thicknesses of the test tube 18, m.

When the distance between optical axes of the beams A and B (FIG.4) and their optical path difference are simultaneously varied in accord with said relations, at the moment of fusion of optical axes of the beams

$a^l$ and b their optical path difference will fall to zero and the photodetector 14 (FIG.2) will display an interference pattern with a maximum contrast. Thanks to the coincidence of optical axes of the interferometrically compared beams $a^l$ and b reflected from both surfaces of the wall of the glass tube 18 (FIG.4), and at the moment when a maximum contrast occurs in the interference pattern, a possibility to register the interference pattern in a wide range of wall thicknesses of the best tube 18 is provided without reducing the input aperture of the photodetector 14 (FIG.2) and, respectively, without increase in measurement time. The distance between optical axes of the beams A and B, as well as their optical path difference, are varied by displacement of the first reflector 6 fastened on the modulator 8 along a normal dropped on the side 7, facing said reflector 6, of the beam-splitting cube 5. It is not difficult to demonstrate that when the reflector 6 gets a shift $\Delta h$, the distance $\Delta D$ between the optical axes of the beams A and B and their optical path difference $\Delta L$ vary in accordance with the following relations:

$$\Delta D = 2\,\Delta h \cdot \sin\theta$$
$$\Delta L = 2\,\Delta h \cdot \cos\theta$$

$$\frac{\Delta D}{\Delta L} = \tan\theta \quad .$$

Taking into account the relation between the angles

$$\tan\theta = \frac{\sin 2\alpha}{2(n^2 - \sin^2\alpha)} \quad ,$$

we obtain

$$\Delta D = \Delta L\,\frac{\sin 2\alpha}{2(n^2 - \sin^2\alpha)} \quad .$$

So the proposed apparatus allows to realize for $\Delta D$ and $\Delta L$ such a law of variation in time that the fusion of the beams $a^l$ and b (FIG.4) occurs at the moment when their optical path difference becomes equal to zero. On the other hand, since the beams reflected simultaneously from the outside and inside surfaces of the wall of the test tube 18 are brought into coincidence and compared interferometrically, the measured optical path variation of the modulator 8 with the first reflector 6 fastened on it from the initial value up to the moment when maximum contrast occurs in the interference pattern is unambiguously related to the difference of positions of said surfaces of the tube wall, that is to its thickness. In consequence, the wall thickness of the glass tube 18 is determined by a single measurement, eliminating thereby the influence of an uncontrollable shift of the tube axis (especially in the direction of the probing beam) on the measurement result. At the moment when an interference pattern with maximum contrast occurs on the photodetector 14 (FIG.2), the unit 15 determining the contrast of interference bands generates a pulse applied to some inputs of the unit 16 registering the position of the optical path modulator 8. At the same time the other inputs of the unit 16 registering the position of the optical path modulator 8 get an information from the unit 20 measuring the relative displacement of the modulator 8, as well as a pulse coming from the unit 10 measuring its initial position. The position in time of the pulse from the unit 10 measuring the initial position of the optical path modulator 8 corresponds to the interference pattern with maximum contrast projected on the photodetector 22 of said unit 10. The interference pattern registered on the photodetector 22 is created as a result of the light beams $a^l$ and b reflected from the surfaces of the reference plane-parallel plate 21. Thanks to the fact that the reference plane-parallel plate 21 is positioned so that the normal dropped on its surface is oriented at an angle $\beta$ with the beam direction, and that the angles $\beta$ and $\theta$ are related between them by the following expression:

$$\tan\theta = \frac{\sin 2\beta}{2(n_1^2 - \sin^2\beta)} \quad ,$$

there is provided a coincidence of the optical axes of light beams reflected by the surfaces of the reference plane-parallel plate 21 when their optical path difference is equal to zero. On the other hand, owing to the fact that the reference plate 21 is offset relative to the optical axis of the illumination system 1, parasitic glares arising from the reflection of light from the faces of said plate 21 are eliminated. The position of the optical path modulator 8, which corresponds to such a position of the reflectors 6 and 11 at which the photodetector 22 registers an interference pattern with maximum contrast, is its initial position. At the moment of time corresponding to maximum contrast on the interference pattern registered by the photodetector 22 the unit 23 determining contrast of the interference bands sends a pulse to the unit 16 registering the position of the optical path modulator 8. When the modulator 8 is displaced, one of the rasters (not shown) fastened on said modulator 8 moves also in a direction perpendicular to the rasters lines. Under these conditions a photodiode (not shown) of the unit 20 measuring the relative displacement of the modulator 8 delivers at its output pulses separated by a time interval corresponding to a displacement of the raster mounted on the modulator 8 by a distance equal to its period. Said information arrives at the inputs of coincidence elements (not shown) of the unit 16 registering the position of the optical path modulator 8.

The unit 16 registering the position of the modulator 8 operates as follows.

Before the measurement cycle begins, the triggers (not shown) as well as the counters (not shown) of the unit 16 registering the position of the optical path modulator 8 are set in their initial state. During the displacement of the optical path modulator 8 from one extreme position to the other, pulses arriving from the units 15 and 23 determining the contrast of interference bands change twice the state of one of the two first triggers of the unit 16 registering the position of the optical path modulator 8. Meanwhile, the state of the other trigger changes only once. The third trigger (not shown) of said unit 16, connected to the output of one of the first two triggers and responding to the second commutation of this trigger determines thereby which of the triggers flips twice or, which is the same, the sequence of arrival of pulses from the units 15 and 23 determining the contrast of interference bands. The trigger that has flipped twice, aided by coincidence elements (not shown), connects a counter (not shown) to the unit 20 measuring the relative displacement of the optical path modulator 8. This counter, counting the number of pulses delivered by said unit 20, determines indirectly the difference between thickness ($d_1$) of the reference plate 21 and the thickness (d) of the wall of the test tube 18. Since the displacement of the optical path modulator 8, corresponding to the arrival of N pulses from the unit 20 measuring the relative displacement of the modulator 8, changes the optical path of a light beam by $2{\cdot}N{\cdot}p{\cdot}\cos\theta$, where p is the rasters period and the optical path difference of the beams $a^l$ and b is determined by the expression

$$\Delta L = 2d \sqrt{n^2 - \sin^2\alpha} \ ,$$

the wall thickness (d) of the test tube 18 will be:

$$d = d_1 \frac{\sqrt{n_1^2 - \sin^2\beta}}{\sqrt{n^2 - \sin^2\alpha}} \pm \frac{N{\cdot}p{\cdot}\cos\theta}{\sqrt{n^2 - \sin^2\alpha}} \quad .$$

The sign + or - depends on the sequence of arrival of pulses from the units 15 and 23 determining the contrast of interference bands, or on the state of the third trigger in the unit 16 registering the position of the optical path modulator 8 after a cycle of measurements. A half of the output aperture of the beam probing the tube 18 is shifted by the plane-parallel plate 25 relative to the main beam in the direction perpendicular to the axis 13 for the test tube and, in consequence, the test tube 18 will be probed by two parallel beams spaced in the direction perpendicular to its axis, thus providing an extension of the range of displacements of the tube axis in said direction.

Besides, in case a semi-transparent plate (not shown) is placed between the reference plate 21 and the beam-splitting cube 5, a third beam is produced which probes the tube and is offset relative to the main beam in a direction perpendicular to the tube axis towards the side opposite to the beams created by the plate 25, thus extending additionally the range of displacements of the tube axis in said direction. If the test tube 18 has a shift in the direction parallel to the line 14 of photodetectors, the angle of incidence between the beam probing said tube 18 and the surface of its wall changes and therefore the light beams due to reflection of light from the surface of the tube 18 are displaced along the line 14 of photodetectors.

Finally, thanks to the fact that the distances between photodetectors of the line 14 are selected on the condition of simultaneous illumination of two successive photodetectors of said line 14, a loss of signal due to said displacement of the tube 18 is excluded.

Industrial Applicability

The proposed method of and apparatus for determining the thickness of a glass tube wall can be most advantageously used to realize a rapid, precise and contactless measurement of the wall thickness of glass tubes monitored in the course of their manufacture.

**Claims**

**1.** A method of determining the thickness of a glass tube wall, residing in splitting a coherent light source radiation into two beams, directing one beam on the wall of the test tube (18) so that the optical axis of said beam is contained in a plane passing through the test tube axis, aligning and comparing interferometrically the beam reflected from the wall of the tube (18) with the second beam, varying the beam optical path, and measuring said optical path variation from an initial value up to the moment when a maximum contrast occurs in the interference pattern, by which contrast the required parameter us evaluated, **characterized** in that the first light beam directed on the wall of the glass tube (18) is oriented at an angle to a normal dropped from the side of illumination onto the axis of said tube, the second light beam is directed on the wall of the glass tube (18) so that the optical axis of the second beam is located in sail plane containing the optical axis of the first beam, is oriented parallel to the latter and does not cut the normal dropped in the plane containing the optical axes of said beams from the side of illumination into the intersection point of the optical axis of the first beam with the wall surface of the tube (18) nearest to the radiation source, the distance between optical axes of the first and of the second beams and their optical path difference being varied according to the following relations:

$$\Delta D = (Kt + C) \frac{\sin 2\alpha}{2(n^2 - \sin^2\alpha)}$$

$$\Delta L = Kt + C,$$

where
$\Delta D$,     distance between optical axes of the first and the second beam, m;
$\Delta L$,     optical path difference of the first and the second beams, m;
K,     rate of variation of the optical path difference of said beams, m;
t,     time, s;
n,     refractive index of the glass tube wall;
$\alpha$,     angle between the normal to the tube axis and the optical axes of the first and the second beams, rad;
C,     constant, m, defined by the following condition:

$$\delta < \Delta L_{min} < 2\sqrt{n^2 - \sin^2\alpha} \cdot d_{min} - \delta$$

$$\Delta L_{max} > 2\sqrt{n^2 - \sin^2\alpha} \cdot d_{max} + \delta \quad ,$$

where

$\delta$ ,       coherent wave length, m;

$\Delta L_{min}$, $\Delta L_{max}$ ,       minimum and maximum values of the optical path difference of the first and the second beams, m;

$d_{min}$, $d_{max}$,       minimum and maximum values of the glass tube wall thickness, m.

2. An apparatus for determining the thickness of a glass tube wall, comprising, positioned in series, an illumination system (1) including a coherent radiation source (2) and a lens (3), a double-beam interferometer (4) including a beam-splitting cube (5), a reflector (6) arranged perpendicular to and symmetric about a normal dropped into the center of a side (7) of the beam-splitting cube (5) and mounted on an optical path modulator (8) mounted for movement along said normal and equipped with a system (9) adapted for measuring the displacements of the optical path modulator (8) and provided with a unit (10) measuring its initial position, an axis (13) on which the test glass tube (18) is mounted and which is placed after the exit window of the interferometer (4) on the beam path, a photodetector (14) positioned on the reverse path of the beam in front of said axis (13) on which the test tube is mounted, a unit (15) adapted for evaluating the contrast of interference bands and having its input is connected to the output of the photodetector (14), a unit (16) registering the positions of the optical path modulator (8) and connected to the system (9) measuring the displacements of the optical path modulator (8), and to the output of the unit (15) evaluating the contrast of interference bands, **characterized** in that the interferometer (4) has a second reflector (11) symmetric to the first reflector (6) about a light-splitting face (12) of the beam-splitting cube (5), the optical axis of the illumination system (1) is oriented at an angle $\theta$ to a normal dropped on a side (17) of the beam-splitting cube (5), facing the illumination system (1), whereas the axis (13) on which the test tube (18) is mounted lies in a plane symmetric to the plane of incidence of the ray of the illumination system (1) on said side (17) of the beam-splitting cube (5) about its light-splitting face (12), the normal dropped onto the axis (13) for the test tube (18) in the plane containing said axis (13) is oriented at an angle $\alpha$ to the beam direction and the angles $\theta$ and $\alpha$ are related between them by the following expression:

$$\tan\theta = \frac{\sin 2\alpha}{2(n^2 - \sin^2\alpha)} \quad ,$$

where n is the refractive index of the wall of the glass tube (18).

3. An apparatus as claimed in Claim 2, **characterized** in that the first and the second reflectors (6) and (11) are made as triple prisms, the optical axis of the illumination system (1) is offset relative to the vertex (24) of the triple prism of the first reflector (6), the unit (10) measuring the initial position of the optical path modulator (8) consists of a reference plane-parallel plate (21) positioned on the beam path after the illumination system (1) and outside its optical axis so that the normal dropped onto said reference plate (21) lies in the plane of incidence of the ray emitted by the illumination system (1) on the side (17) of the beam-splitting cube (5), facing the illumination system (1), and is oriented at an angle $\beta$ to the direction of the beam piercing through said plate (21), of a photodetector (22) located in front of said plate (21) on the reverse path of the beam, and of a unit (23) evaluating the contrast in the interference pattern with its input connected to the output of the photodetector (22), the angle $\beta$ being related to the angle $\theta$ by the following expression:

$$\tan \theta = \frac{\sin 2\beta}{2(n_1^2 - \sin^2\beta)} \quad ,$$

where $n_1$ is the refractive index of the reference plate.

4. An apparatus as claimed in Claim 2, **characterized** in that the photodetector (14) positioned in front of the axis (13) on which is mounted the tube (18), is represented by a line of photodetectors the centers of which are separated by distances equal to the exit aperture of the illumination system (1).

5. An apparatus as claimed in Claim 2, **characterized** in that it further includes a plane-parallel plate (25) positioned between the exit window of the interferometer (4) thus covering a half of the exit pupil of said interferometer (4), and the axis (13) on which is mounted the test tube (18), the boundary of said exit pupil being the plane containing the axis (13) for the test tube, whereas the projection of the normal to said plate (25) in this plane is parallel to the beam path.

FIG.1

FIG.2

FIG.3

FIG.4

# INTERNATIONAL SEARCH REPORT

International Application No PCT/SU 89/00185

## I. CLASSIFICATION OF SUBJECT MATTER (if several classification symbols apply, indicate all) 6

According to International Patent Classification (IPC) or to both National Classification and IPC

Int.Cl.$^5$ G 01 B 11/06

## II. FIELDS SEARCHED

### Minimum Documentation Searched 7

| Classification System | Classification Symbols |
|---|---|
| Int.Cl.$^4$ | G 01 B 11/02, 11/06 |

Documentation Searched other than Minimum Documentation
to the Extent that such Documents are Included in the Fields Searched 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | US, A, 4647205 (TOPWAVE INSTRUMENTS OY.) 3 March 1987 (03.03.87), see fig. 1,2, column 2, lines 20-50 (cited in the description) | 1,2 |
| A | US, A, 4387994 (N. BALASUBRAMANIAN) 14 June 1983 (14.06.83), see fig.1-4, column 3, lines 20-65 | 1,2 |

------------

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 23 January 1990 (23.01.90) | 23 March 1990 (23.03.90) |

| International Searching Authority | Signature of Authorized Officer |
|---|---|
| ISA/SU | |

Form PCT/ISA/210 (second sheet) (January 1985)